# EUROPÄISCHE PATENTANMELDUNG

(11) **EP 0 875 266 A2**
(43) Veröffentlichungstag der Anmeldung: **04.11.1998**
(21) Anmeldenummer: 97121166.9
(22) Anmeldetag: 03.12.1997
(51) Int. Cl.: B01D 3/06, C08F 6/10

(54) **Entspannungsvorrichtung**

(30) Priorität: 23.01.1997 DE 19702266
(71) Anmelder: HÜLS AKTIENGESELLSCHAFT, 45764 Marl (DE)
(72) Erfinder: Beher, Klaus, Dr., 45721 Haltern (DE); Krappitz, Werner, Dr., 48249 Dülmen (DE); Obschernings, Hermann, 45772 Marl (DE); Schwagrzinna, Thomas, 44628 Herne (DE)

(57) **Zusammenfassung**

Strukturviskose Fluide können durch herkömmliche Armaturen, die nur den Strömungsquerschnitt verengen, nicht gedrosselt werden.

Die erfindungsgemäße Entspannungsvorrichtung ermöglicht das Drosseln strukturviskoser Fluide, indem sie dem Fluid durch einen verstellbaren Verdrängungskörper eine ausreichende Reibfläche zum Druckabbau in Strömungsrichtung zur Verfügung stellt.

Drosseln strukturviskoser Fluide.

## Beschreibung

Die Erfindung betrifft eine Entspannungsvorrichtung für strukturviskose Fluide und ihre bevorzugte Verwendung bei der Entgasung von Kunststoffschmelzen.

Aus dem SRI Report 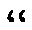 The SDS Polystyrene Process 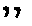 von Shao-Hwa Wang (PEP Review No. 90-2-3, Okt. 1991) ist ein zweistufiger Entgasungsprozeß für Polystyrolschmelzen bekannt. Die zweistufige Entgasung erfolgt durch Entspannung der Schmelze in Behältern bei einem von Stufe zu Stufe abnehmenden Druckniveau und dient dazu, noch vorhandenes monomeres Styrol, Oligomere des Styrols und Lösemittel aus der Polystyrolschmelze zu entfernen. Die vom Polymerisationsreaktor kommende Schmelze wird zunächst unter Druck gesetzt, erwärmt und im Behälter der ersten Stufe entspannt, wobei ein Teil der unerwünschten Bestandteile verdampft und abgezogen wird. Die aus dem ersten Behälter abgezogene Polystyrolschmelze wird anschließend erneut verdichtet, mit Wasser versetzt, in einem Mischapparat mit dem Wasser fein durchsetzt und im zweiten Entgasungsbehälter wiederum entspannt. Das zwischen den Stufen zugeführte und in der zweiten Entspannung verdampfende Wasser dient dabei als Stripphilfsmittel zum verbesserten Entfernen der neben dem Polystyrol noch in der Schmelze enthaltenen unerwünschten Bestandteile in der zweiten Entgasungsstufe.

Das Einmischen von Wasser oder anderen Zusatzsfoffen in die Kunststoffschmelze muß bei derartigen mehrstufigen Entgasungsprozessen bei so hohen Temperaturen erfolgen, daß die Kunststoffschmelze flüssig bleibt. Um trotz der hohen Temperaturen ein Verdampfen der Zusatzstoffe im Bereich der Mischstreche zu verhindern, ist ein ausreichend hoher Systemdruck erforderlich, der alle Komponenten in flüssiger Phase hält. Dieser hohe Druck kann in der Mischstrecke z. B. mit Hilfe einer Entspannungsvorrichtung vor dem nächsten Entspannungsbehälter aufrechterhalten werden, wobei der Druck selbst durch eine Pumpe erzeugt wird, die am Austritt des vorhergehenden Entspannungsbehälters die Kunststoffschmelze gegen die Entspannungsvorrichtung fördert. Die Entspannung der Schmelze erfolgt dann nicht erst im nächsten Behälter, sondern bereits in der Entspannungsvorrichtung.

Bei Newtonschen Fluiden können als Entspannungsvorrichtungen einfache Armaturen, die den Strömungsquerschnitt verengen, also z. B. Ventile oder Blenden, verwendet werden. Kunststoffschmelzen zeigen jedoch häufig ein strukturviskoses Fließverhalten, d. h. ihre Zähigkeit (Viskosität) nimmt mit wachsender Schergeschwindigkeit ab. Auch Polystyrolschmelzen sind strukturviskos.

Um den Fließwiderstand eines solchen strukturviskosen Fluids zu erhöhen, reicht es folglich nicht aus, den Strömungsquerschnitt zu verengen, so daß hier herkömmliche Entspannungsorgane wie Ventile oder Blenden zum Druckaufbau (bzw. -abbau über die Armatur in Strömungsrichtung) versagen.

Aufgabe der vorliegenden Erfindung ist es daher, eine universell einsetzbare Entspannungsvorrichtung für strukturviskose Fluide bereitzustellen, die insbesondere bei der mehrstufigen Entgasung strukturviskoser Kunststoffschmelzen unter Verwendung von Zusatzstoffen einsetzbar ist.

Diese Aufgabe wird erfindungsgemäß gelöst durch eine Entspannungsvorrichtung für strukturviskose Fluide gemäß Patentanspruch 1, die gekennzeichnet ist durch einen entlang der Achse der Strömungsrichtung verstellbaren Verdrängungskörper und einen im Verstellbereich des Verdrängungskörpers sich in Strömungsrichtung vergrößernden Strömungsquerschnitt.

Der Verdrängungskörper und die Innengeometrie der erfindungsgemäßen Entspannungsvorrichtung im Verstellbereich des Verdrängungskörpers sind so aufeinander abgestimmt, daß der benötigte Druckabfall erreicht wird.

Gegenstand der Erfindung ist darüber hinaus ein mehrstufiges Verfahren zur Entgasung strukturviskoser Kunststoffschmelzen durch Entspannung, bei dem zumindest zwischen zwei Stufen die Kunststoffschmelze erneut verdichtet und in einem Mischapparat vor der nächsten Entspannung mit einem Zusatzstoff versetzt wird, das dadurch gekennzeichnet ist, daß der Druck in der Mischstrecke mit Hilfe einer erfindungsgemäßen Entspannungsvorrichtung gesteuert wird, die zwischen Mischstrecke und nächster Entgasungsstufe angeordnet ist.

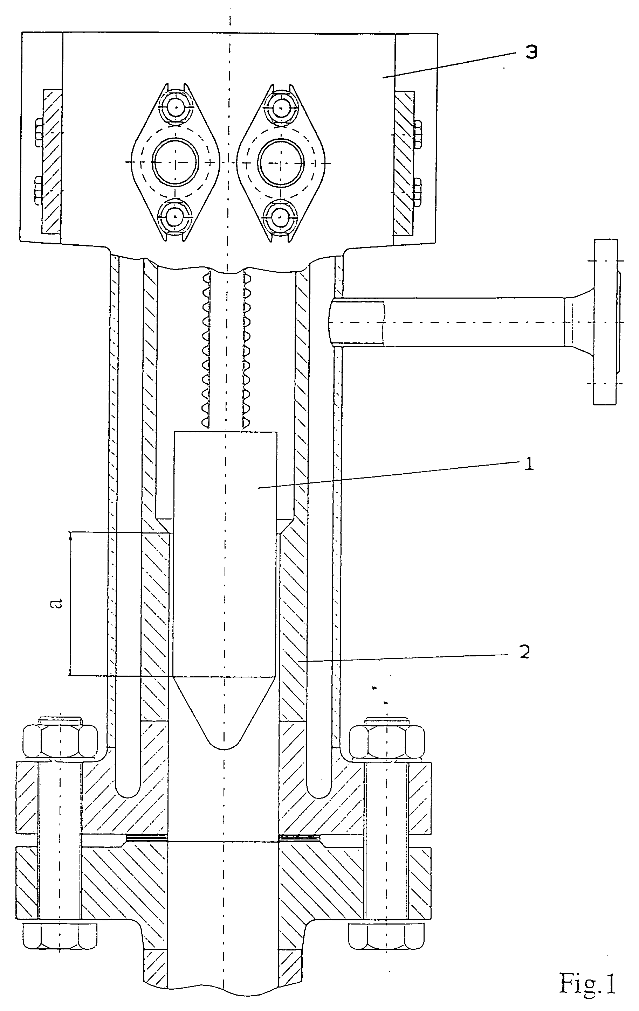

In einer bevorzugten, sehr einfachen Ausführung der erfindungsgemäßen Entspannungsvorrichtung setzt sich die Vorrichtung im Kern aus einem Kolben/Zylinder-System als Verdrängungskörper und Gehäuse zusammen, wie es schematisch in Figur 1 dargestellt ist. Der Kolben 1 ist derart bemessen und wird im beheizbaren Zylinder 2 derart geführt, daß sich als Strömungsquerschnitt für das anströmende strukturviskose Fluid im Bereich a ein Ringspalt ergibt. Die Fläche des Strömungsquerschnitts ist damit in diesem Bereich deutlich kleiner als im übrigen freien Strömungskanal. Die Länge des Bereichs a und damit die Länge des Strömungskanals im Bereich a wird dadurch bestimmt, wie tief der Kolben 1 in den verengten Teil des Zylinders 2 eintaucht. Zur Variation der Eintauchtiefe kann er über den Verstellmechanismus 3 verschoben werden. Dadurch verändert sich auch die von der erfindungsgemäßen Vorrichtung für das strukturviskose Fluid bereitgestellte Reibfläche, die über Wandreibung des Fluids für den Druckaufbau (bzw. -abbau in Strömungsrichtung) im Fluid erforderlich ist. Die veränderliche Reibfläche wird durch die Außenfläche des Kolbens und die Innenfläche der Zylinderwand im Bereich a gebildet. Das strukturviskose Fluid kann über die Eintauchtiefe des Kolbens in den Zylinder kontrolliert gedrosselt werden, indem eine der Druckänderung entsprechende Fläche mit Wandreibung zur Verfügung gestellt wird, die zusätzlich auch den Effekt abnehmender Zähigkeit durch wachsende Schergeschwindigkeit kompensiert. Die Größe des Ringspalts sowie die Spannbreite der möglichen Eintauchtiefe sind bei der Auslegung der erfindungsgemäßen Vorrichtung anhand der rheologischen Daten des Fluids und der späteren Betriebsbedingungen bei der Drosselung so zu dimensionieren, daß der gewünschte Drosseleffekt erzielt wird und ausreichend Variationsmöglichkeiten für den Betrieb verbleiben.

Anders als herkömmliche Armaturen, die den Strömungsquerschnitt verändern, ermöglicht die erfindungsgemäße Entspannungsvorrichtung also eine Veränderung der Wandreibung durch Variation der Reibfläche im Strömungskanal. Damit wird überraschenderweise eine kontrollierte Drosselung strukturviskoser Fluide möglich.

Bezüglich der Form der Bauteile ist die erfindungsgemäße Entspannungsvorrichtung nicht auf rotationssymmetrische Kolben/Zylinder-Systeme beschränkt. Es können auch beliebig andersartig geformte Verdrängungskörper und darauf abgestimmte Gehäuse verwendet werden, die einen angemessenen Spalt als Strömungsquerschnitt freigeben und längs gegeneinander beweglich sind. Der Spalt als Strömungsquerschnitt muß kein Ringspalt sein; er muß weder über den gesamten Verstellbereich des Verdrängungskörpers konstant sein, noch muß er den gesamten Umfang des Körpers bedecken. So kann die erfindungsgemäße Vorrichtung auch auf Basis von z. B. konischen Kolben/Zylinder-Systemen arbeiten, bei denen eine Verschiebung des Kolbens in Längsrichtung zugleich auch eine Veränderung des Strömungsquerschnittes zur Folge hat. Die erfindungsgemäßen Entspannungsvorrichtungen können dabei sogar letztlich als Absperrorgan dienen, wobei sowohl die Kegel- als auch eine Stirnfläche des Kolbens als Dichtfläche geeignet sind. Die Vergrößerung des Strömungsquerschnitts in Strömungsrichtung im Verstellbereich kann stufenweise in einer oder mehreren Stufen und/oder kontinuierlich erfolgen.

Die Führung des Verdrängungskörpers im Gehäuse kann auf dem Fachmann allgemein bekannte Weise realisiert sein, so z. B. durch mehrere am Umfang angeordnete Paßfedern oder andersartige Vorsprünge bzw. Einkerbungen in Körper und Gehäuse in Anlehnung an das "Nut und Feder"-Prinzip. Zur Veränderung der Eintauchtiefe ist der Kolben in einer bevorzugten Ausführung entlang der Bewegungsachse mit einer Zahnstange verbunden, die über zwei Ritzel in Bewegungsrichtung verschoben werden kann. Daneben sind jedoch auch diverse andere Verstellmechanismen denkbar, so z. B. eine Verstellung per Spindel oder andere mechanische, elektrische und/oder pneumatische Mechanismen.

Die Werkstoffauswahl für die erfindungsgemäße Entspannungsvorrichtung für strukturviskose Fluide richtet sich nach den zu behandelnden Fluiden sowie nach den vorgesehenen Betriebsbedingungen. Bevorzugt werden als Materialien nichtrostende Chrom/Nickelstähle eingesetzt; insbesondere bei Anwendungen mit hoher Druck- und Temperaturbeanspruchung.

Als zu drosselnde Fluide kommen alle strukturviskosen Fluide in Betracht, also z. B. Silikone, Spinnlösungen, Staufferfett oder auch Kunststoffschmelzen wie etwa Polystyrolschmelzen. Abhängig vom Schmelzpunkt des Fluids kann eine Zusatzbeheizung der Entspannungsvorrichtung erforderlich sein.

Bei strukturviskosen Kunststoffschmelzen wird die erfindungsgemäße Vorrichtung bevorzugt in mehrstufigen Entgasungsprozessen mit Entspannung eingesetzt, die dazu dienen, unerwünschte Bestandteile wie nicht umgesetztes Monomer, Oligomere oder Lösemittel aus dem Polymer zu entfernen. Besonders bevorzugt ist der Einsatz bei mehrstufigen Prozessen, bei denen zwischen den einzelnen Stufen die Zugabe eines Zusatzstoffes zur Schmelze erfolgt, um die Ausgasung der unerwünschten Bestandteile nach dem Entspannen zu verbessern. Mit Hilfe der erfindungsgemäßen Entspannungsvorrichtung kann in Stromrichtung zwischen der Förderpumpe am Ausgang des Entgasungsbehälters der vorausgehenden Stufe und der erfindungsgemäßen Entspannungsvorrichtung vor der nächsten Entgasungsstufe ein Druckniveau gehalten werden, daß die Zugabe von Zusatzstoffen wie z. B. Wasser zur Schmelze in z. B. statischen Mischapparaten auch bei hohen Temperaturen (> 300 °C) ermöglicht, ohne daß ein vorzeitiges Verdampfen der Zusatzstoffe droht. Die Stellung des Verdrängungskörpers innerhalb der Entspannungsvorrichtung kann automatisch über einen Druckaufnehmer gesteuert werden, der zwischen dem Mischer und der Vorrichtung angeordnet ist Besonders bevorzugt ist der Einsatz der erfindungsgemäßen Entspannungsvorrichtungen bei Entgasungsprozessen für Polystyrolschmelzen.

Für die Verwendung in solchen mehrstufgen Entgasungsprozessen mit Entspannung wird die erfindungsgemäße Entspannungsvorrichtung vorzugsweise direkt derart in die Entspannungsstufe integriert, daß die Strömungsquerschnittsvergrößerung in Strömungsrichtung bei Eintritt des Fluids in den Behälter erfolgt. Das Fluid wird so unmittelbar in den Behälter entspannt, wodurch eine verbesserte Entgasung erzielt wird.

## Patentansprüche

1. Entspannungsvorrichtung für strukturviskose Fluide,
gekennzeichnet durch
einen entlang der Achse der Strömungsrichtung verstellbaren Verdrängungskörper (1) und einen im Verstellbereich des Verdrängungskörpers (1) sich in Strömungsrichtung vergrößernden Strömungsquerschnitt.

2. Entspannungsvorrichtung für strukturviskose Fluide nach Anspruch 1,
dadurch gekennzeichnet,
daß der Verdrängungskörper (1) über einen mechanischen, elektrischen und/oder pneumatischen Verstellmechanismus bewegt und fixiert wird.

3. Entspannungsvorrichtung für strukturviskose Fluide nach Anspruch 2,
dadurch gekennzeichnet,
daß der Verdrängungskörper (1) über eine an ihm befestigte Zahnstange und einen Ritzelantrieb bewegt und fixiert wird.

4. Entspannungsvorrichtung für strukturviskose Fluide nach zumindest einem der vorherigen Ansprüche,
dadurch gekennzeichnet,
daß der Verdrängungskörper (1) im Gehäuse (2) geführt ist.

5. Entspannungsvorrichtung für strukturviskose Fluide nach zumindest einem der vorherigen Ansprüche,
dadurch gekennzeichnet,
daß der Verdrängungskörper (1) ein Kolben ist, der in einer zylindrischen Gehäusebohrung mit zumindest zwei unterschiedlichen Innendurchmessern im Verstellbereich des Kolbens über einen Verstellmechanismus bewegt und fixiert wird.

6. Verfahren zur Entgasung von strukturviskosen Kunststoffschmelzen durch mehrstufige Entspannung, bei dem zumindest zwischen zwei Stufen die Kunststoffschmelze erneut verdichtet und in einem Mischapparat vor der nächsten Entspannung mit einem Zusatzstoff versetzt wird,
dadurch gekennzeichnet,
daß der Druck in der Mischstrecke über eine Entspannungsvorrichtung gemäß zumindest einem der Patentansprüche 1 bis 5 gesteuert wird, die zwischen Mischstrecke und nächster Entgasungsstufe angeordnet ist.

7. Verfahren nach Anspruch 6,
dadurch gekennzeichnet,
daß die Stellung des Verdrängungskörpers (1) der Entspannungsvorrichtung im Verstellbereich automatisch über einen Druckaufnehmer gesteuert wird, der sich in Strömungsrichtung zwischen Mischer und Entspannungsvorrichtung befindet.

8. Verfahren nach Anspruch 6 oder 7,
dadurch gekennzeichnet,
daß die Kunststoffschmelze eine Polystyrolschmelze und der Zusatzstoff Wasser ist.

9. Verfahren nach zumindest einem der Ansprüche 6 bis 8,
dadurch gekennzeichnet,
daß die Entspannungsvorrichtung in die Entspannungsstufe integriert ist.
